# EUROPEAN PATENT APPLICATION

(11) **EP 4 786 176 A1**
(43) Date of publication of application: **05.08.2026**
(21) Application number: 25809927.4
(22) Date of filing: 07.04.2025
(51) Int. Cl.: B32B 27/20, B32B 27/28, B32B 27/12, B32B 9/04, B32B 9/00, B32B 17/02, B32B 17/10, B32B 37/12, B32B 37/06, B32B 37/10

(54) **REFRACTORY PAD**

(30) Priority: 07.05.2024 KR 20240059995; 07.06.2024 KR 20240074276; 04.04.2025 KR 20250044125
(71) Applicant: LG Energy Solution, Ltd., Seoul 07335 (KR)
(72) Inventor: JEONG, Jaehoon, Daejeon 34122 (KR); KIM, Minpyo, Daejeon 34122 (KR); LEE, Jegwon, Daejeon 34122 (KR); KIM, Minjune, Daejeon 34122 (KR)
(74) Representative: Goddar, Heinz J.
(86) International application number: PCT/KR2025/004670
(87) International publication number: WO 2025/234611

(57) **Abstract**

A fire-resistant pad according to the present disclosure may comprise a thermal insulation layer containing a silicone-aerogel composite including silicone and aerogel, wherein the silicone-aerogel composite may contain a predetermined amount of aerogel.

## Description

### [TECHNICAL FIELD]

### REFERENCE TO RELATED APPLICATION(S)

The present application claims priority to and the benefit of Korean patent application no. KR10-2024-0059995, filed on May 7, 2024, Korean patent application no. KR10-2024-0074276, filed on June 7, 2024, and Korean patent application no. KR10-2025-0044125, filed on April 4, 2025, the entire contents of which are incorporated herein by reference.

The present disclosure relates to a fire-resistant pad, and more particularly, to a fire-resistant pad including a thermal insulation layer containing a silicone-aerogel composite.

### [BACKGROUND]

As mobile devices have been increasingly developed, and the demand for such mobile devices has increased, the demand for secondary batteries as energy sources is also rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer, and a wearable device.

A battery cell of the secondary battery is manufactured by incorporating an electrode assembly together with an electrolyte into a secondary battery case, and the electrode assembly is manufactured by laminating and/or winding a positive electrode, a separator, and a negative electrode. A plurality of the manufactured battery cells are laminated to constitute a battery module or a battery pack.

In accordance with driving of the cell, heat may be generated in the battery cell, and if the heat is transferred to and accumulated in adjacent battery cells, a battery thermal runaway propagation occurs.

Blocking battery thermal runaway propagation is extremely important for the safety of electric vehicle batteries, and much research is being conducted in this regard. In the current industry, silicone or polyurethane materials are arranged between the battery cells, and used as fire-resistant pads, but these materials are insufficient to prevent ultra-high temperature flames formed during battery thermal runaway propagation. Therefore, fire-resistant pads having excellent fire resistance and methods of manufacturing the same are being studied.

### [DETAILED DESCRIPTION OF THE INVENTION]

### [Technical Problem]

The present disclosure has been designed to solve the above problems, and an object of the present disclosure is to provide a fire-resistant pad having excellent thermal insulation properties.

### [Technical Solution]

According to an aspect of the present disclosure, a fire-resistant pad comprises: a thermal insulation layer containing a silicone-aerogel composite including silicone and aerogel, wherein the silicone-aerogel composite contains 0.5 wt.% or more and 40 wt.% or less of aerogel, based on the total weight of the thermal insulation layer.

According to one specific embodiment, the content of the silicone may be 60 wt.% or more and 99.5 wt.% or less.

According to one embodiment, the content of the aerogel may be 15 wt.% or more and 30 wt.% or less.

According to one embodiment, the thickness of the thermal insulation layer may be 0.1 mm or more and 5 mm or less.

According to one embodiment, the fire-resistant pad may further comprise a fire-resistant layer that is arranged on at least one surface of the thermal insulation layer, and includes a fire-resistant material containing at least one of a non-combustible material and a flame-retardant material.

According to one embodiment, the thickness of the fire-resistant layer may be 0.1 mm or more and 5 mm or less.

According to one embodiment, the fire-resistant layer may be arranged on both surfaces of the thermal insulation layer.

According to one embodiment, the fire-resistant pad may further comprise an adhesive layer that is arranged between the fire-resistant layer and the thermal insulation layer.

According to one embodiment, the fire-resistant material may comprise at least one of a mica fiber, a glass fiber, a basalt fiber, a ceramic paper, and a vermiculite-coated glass fiber cloth.

According to one embodiment, the fire-resistant pad may further comprise a first layer, a second layer, a third layer, a fourth layer and a fifth layer that are laminated in sequence, wherein the second layer and the fourth layer are the thermal insulation layer, and the first layer, the third layer and the fifth layer are the fire-resistant layer.

According to one embodiment, the first layer and the fifth layer may comprise the same fire-resistant material with each other, and the third layer may comprise a fire-resistant material different from the first layer and the fifth layer.

According to one embodiment, the first layer, the third layer and the fifth layer may comprise the same fire-resistant material with each other.

According to one embodiment, the first layer and the fifth layer may be ceramic paper, and the third layer may be a vermiculite-coated glass fiber cloth.

According to one embodiment, the first layer, the third layer, and the fifth layer may be ceramic paper.

According to one embodiment, the thickness of the second layer and the fourth layer may be smaller than the thickness of the first layer, the third layer, and the fifth layer.

According to one embodiment, the thickness of each of the first layer, the third layer, and the fifth layer may be 0.5 mm or more and 3 mm or less.

According to one embodiment, the thickness of each of the second layer and the fourth layer may be 0.1 mm or more and 2 mm or less.

According to one embodiment, the aerogel may comprise a silica gel.

According to one embodiment, the silicone may comprise a polydimethylsiloxane (PDMS) resin, and optionally further comprise at least one of a crosslinking agent and a catalyst.

According to one embodiment, based on the total mixing amount of the silicone-aerogel composite, the content of the polydimethylsiloxane resin may be 47 wt.% or more and 99.5 wt.% or less, the content of the crosslinking agent is 0 wt.% or more and 10 wt.% or less, and the content of the catalyst is 0 wt.% or more and 3 wt.% or less.

According to one embodiment, the thermal conductivity of the fire-resistant pad may be 10 mW/m·K or more and 200 mW/m·K or less.

According to one embodiment, the fire-resistant pad may have a stress of 250 kPa or less at a strain of 40%.

According to one embodiment, the fire-resistant pad may have a residual rate of 50 wt.% or more at 1000°C.

According to one embodiment, the fire-resistant pad may have a thermal decomposition starting temperature of 300°C or more.

According to one embodiment, the fire-resistant pad may have a heat of combustion of 5000 cal/g or more.

According to one embodiment, the fire-resistant pad may have a thickness of 0.2 mm or more and 5 mm or less.

According to one embodiment, the fire-resistant pad may have a thickness reduction rate of 40% or less when a pressure of 220 kPa is applied.

According to one embodiment, the fire-resistant pad may have a thickness of 0.12 mm or more and 3 mm or less when a pressure of 220 kPa is applied.

### [Advantageous Effects]

The fire-resistant pad according to the present disclosure includes a thermal insulation layer containing a silicone-aerogel composite, and thus can exhibit excellent thermal insulation properties.

### [BRIEF DESCRIPTION OF THE DRAWINGS]

FIG. 1 is a cross-sectional view of a fire-resistant pad according to one embodiment.
FIG. 2 is a schematic perspective view illustrating one end of the fire-resistant pad of FIG. 1.
FIG. 3 is a cross-sectional view of a fire-resistant pad according to one embodiment.
FIG. 4 is a cross-sectional view of a fire-resistant pad according to one embodiment.
FIG. 5 is a cross-sectional view of a fire-resistant pad according to one embodiment.
FIG. 6 is a graph showing the results of a TGA analysis of a fire-resistant pad according to Example 2.
FIG. 7 is a graph showing the results of a TGA analysis of a non-combustible material according to one embodiment.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

In order to clearly describe the present disclosure, descriptions of parts unrelated to the description of the present disclosure will be omitted, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Now, a fire-resistant pad according to the present disclosure will be described.

A fire-resistant pad according to the present disclosure comprises:
a thermal insulation layer containing a silicone-aerogel composite including silicone and aerogel, wherein the silicone-aerogel composite contains 0.5 wt.% or more and 40 wt.% or less of aerogel, based on the total weight of the thermal insulation layer.

In one specific embodiment, the silicone-aerogel composite may contain 60 wt.% or more and 99.5 wt.% or less of silicone based on the total weight of the thermal insulation layer.

A fire-resistant pad according to one specific embodiment comprises the above-mentioned thermal insulation layer.

In another embodiment, the fire-resistant pad may further comprise a fire-resistant layer that is arranged on at least one surface of the thermal insulation layer, and includes a fire-resistant material containing at least one of a non-combustible material and a flame-retardant material.

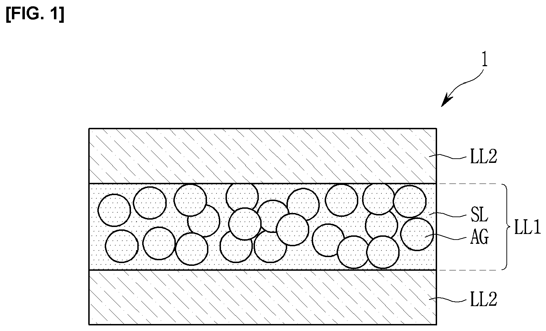

FIG. 1 is a cross-sectional view of a fire-resistant pad according to one embodiment.

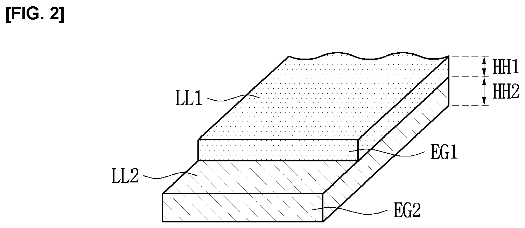

Referring to FIG. 1, the fire-resistant pad 1 of one embodiment includes a thermal insulation layer LL1, and may further include a fire-resistant layer LL2 that is arranged on at least one surface of the thermal insulation layer LL1. In FIG. 1, an embodiment in which the fire-resistant layer LL2 is arranged on both surfaces of the thermal insulation layer LL1 is shown by way of example, but the fire-resistant pad of the present disclosure is not limited thereto. For example, the fire-resistant pad 1 may include only the thermal insulation layer LL1, or may have a structure in which the fire-resistant layer LL2 is arranged on only one surface of the thermal insulation layer LL1 (see Fig.2).

The thermal insulation layer LL1 includes a silicone-aerogel composite including silicone SL and aerogel AG. Specifically, the thermal insulation layer LL1 is formed by curing a silicone-aerogel composite and forming it into a sheet. The thermal insulation layer LL1 includes aerogel AG and has a sufficiently low thermal conductivity, thereby exhibiting excellent thermal insulation performance. For example, the thermal conductivity of the thermal insulation layer LL1 may be 10 mW/m·K or more and 200 mW/m·K or less, preferably 10 mW/m·K or more and 150 mW/m·K or less.

The thermal insulation layer LL1 may have a high heat of combustion, for example, a heat of combustion of 5000 cal/g or more (International Standard ISO 1716, measured by Parr's Bomb Calorimeter). Such a high heat of combustion is a property that the thermal insulation layer LL1 has by containing a silicone-aerogel composite material that is a mixture of silicone and aerogel.

The thermal insulation layer LL1 contains silicone SL and aerogel AG in an appropriate ratio and thus can be easily formed into a sheet. In the silicone-aerogel composite, aerogel AG exists in the form of particles in cured silicone SL. Specifically, in the silicone-aerogel composite, the content of aerogel AG is 0.5 wt.% or more and 40 wt.% or less. Further, the content of silicone SL may be 60 wt.% or more and 99.5 wt.% or less. The content of aerogel AG is preferably 0.5 wt.% or more and 30 wt.% or less, more preferably 10 wt.% or more and 30 wt.% or less, and even more preferably 15 wt.% or more and 30 wt.% or less. When the content of aerogel AG is less than 0.5 wt.%, the thermal insulation properties of the silicone-aerogel composite may be deteriorated. When the content of aerogel AG is greater than 40 wt.%, it may be difficult to form the silicone-aerogel composite into a pad.

In one embodiment, aerogel AG may comprise silica gel SiO₂. For example, aerogel AG may have a particle size of 0.01 mm to 1.5 mm and a pore diameter of 1 nm to 200 nm.

In one embodiment, silicone SL comprises a polydimethylsiloxane (PDMS) resin, and optionally may further comprise at least one of a crosslinking agent and a catalyst.

Specifically, the polydimethylsiloxane resin may be a polydimethylsiloxane resin having a siloxane skeleton and having a vinyl group at the terminal (PDMS-vinyl terminated, ViMe₂SiO(Me₂SiO)_{X}SiMe₂Vi). Further, the molecular weight of the polydimethylsiloxane resin used in the silicone SL of the present disclosure may be 1,000 g/mol or more and 100,000 g/mol or less. As the crosslinking agent, a silicone-based crosslinking agent containing at least one Si-H structure may be used, and for example, polymethylhydrogen siloxane may be used. As the catalyst, a platinum catalyst may be used, or a peroxide-based initiator may be used in accordance with the curing mechanism.

In one embodiment, the constitution of silicone SL may include a polydimethylsiloxane resin and a crosslinking agent, or may include a polydimethylsiloxane resin and a catalyst, or may include a polydimethylsiloxane resin, a crosslinking agent, and a catalyst.

Based on the total mixing amount of the silicone-aerogel composite, the content of the polydimethylsiloxane resin may be 47 wt.% or more and 99.5 wt.% or less, the content of the crosslinking agent may be 0 wt.% or more and 10 wt.% or less, and the content of the catalyst may be 0 wt.% or more and 3 wt.% or less.

However, the constitution of the silicone is not limited thereto, and the silicone may further include a known flame-retardant additive to enhance the flame retardant effect. For example, the flame-retardant additive may include at least one selected from the group consisting of: nitrogen-based substances such as guanidine compounds and melamine compounds, phosphate-based substances such as triphenyl phosphate, trixylenyl phosphate, tricresyl phosphate, and triisophenyl phosphate, metal hydroxide-based substances such as Al(OH)₃ and Mg(OH)₂, ammonium-based substances such as ammonium polyphosphate, ammonium phosphate, and ammonium carbonate, and antimony-based substances.

The fire-resistant layer LL2 may include a fire-resistant material including at least one of a non-combustible material and a flame-retardant material. The fire-resistant material may include at least one of a mica fiber, a glass fiber, a basalt fiber, a ceramic paper, and a vermiculite-coated glass fiber cloth. In addition, the fire-resistant material may be provided in a sheet shape.

The fire-resistant pad 1 of the present disclosure includes the thermal insulation layer LL1 and fire-resistant layer LL2 described above, and thus can have excellent thermal insulation performance and fire resistance. Furthermore, the fire-resistant layer LL2 serves as a support for the thermal insulation layer LL1, so that the fire-resistant pad 1 can secure sufficient flexibility and strength.

FIG. 2 is a schematic perspective view illustrating one end of the fire-resistant pad of FIG. 1.

In FIG. 2, one fire-resistant layer LL2 and one thermal insulation layer LL1 included in the fire-resistant pad 1 of FIG. 1 are illustrated in an enlarged manner for the purpose of explanation,

Referring to FIG. 2, at one end of the fire-resistant pad, the end EG1 of the thermal insulation layer LL1 may be arranged on the inner side than the end EG2 of the fire-resistant layer LL2. Although not shown in the figure, at the other end of the fire-resistant pad, the end EG1 of the thermal insulation layer LL1 may be arranged on the inner side than the end EG2 of the fire-resistant layer LL2. As a result, the area of the thermal insulation layer LL1 may be smaller than the area of the fire-resistant layer LL2, and the thermal insulation layer LL1 may not be exposed outside the fire-resistant layer LL2.

In addition, the thickness HH1 of one thermal insulation layer LL1 may be 0.1 mm or more and 5 mm or less. For example, the thickness HH1 of the thermal insulation layer LL1 may be 0.1 mm or more and 3 mm or less, or 0.1 mm or more and 2 mm or less, and specifically, may be 1 mm or 2 mm, but the embodiments are not limited thereto. The thickness HH2 of one fire-resistant layer LL2 may be 0.1 mm or more and 5 mm or less. For example, the thickness HH2 of the fire-resistant layer LL2 may be 0.1 mm or more and 3 mm or less, or 0.5 mm or more and 2 mm or less. If the thickness HH1 of the thermal insulation layer LL1 is less than 0.1 mm, the thermal insulation performance of the fire-resistant pad 1 may be deteriorated. If the thickness HH2 of the fire-resistant layer LL2 is less than 0.1 mm, the fire-resistant performance of the fire-resistant pad 1 may be deteriorated. If the thickness HH1, HH2 of either one of the insulation layer LL1 and the fire-resistant layer LL2 is greater than 5 mm, the volume of the fire-resistant pad 1 may increase excessively, which may make it difficult to secure energy density relative to the volume of the battery when applied to the battery. The thickness HH1 of the thermal insulation layer LL1 and the thickness HH2 of the fire-resistant layer LL2 may be identical to each other, or different from each other. For example, the thickness HH1 of the thermal insulation layer LL1 and the thickness HH2 of the fire-resistant layer LL2 may be 1 mm which is identical to each other, but the embodiments are not limited thereto.

The total thickness of the fire-resistant pad 1 may be 0.2 mm or more and 5 mm or less. When the fire-resistant pad 1 includes only a thermal insulation layer LL1, it may include two or more sub-layers.

As an example, the total thickness of the fire-resistant pad 1 may be 1 mm or more and 5 mm or less, but the embodiments are not limited thereto.

Meanwhile, the thickness HH1 of the thermal insulation layer LL1, the thickness HH2 of the fire-resistant layer LL2, and the thickness of the fire-resistant pad 1 are thicknesses measured under the state of not receiving a separate pressure.

In one embodiment, the fire-resistant pad 1 of the present disclosure may have a thickness reduction rate of 40% or less when a pressure of 220 kPa is applied. That is, the fire-resistant pad 1 may have a thickness reduction rate of 0% or more and 40% or less when a pressure of 220 kPa is applied. Specifically, the thickness of the fire-resistant pad 1 may be 0.2 mm or more and 5 mm or less, and when a pressure of 220 kPa is applied to the fire-resistant pad 1, the thickness may be 0.12 mm or more and 3 mm or less. Further, the fire-resistant pad 1 of the present disclosure may have a thickness reduction rate of 25% or less, for example, 20% or less, when a pressure of 30 kPa is applied. That is, the fire-resistant pad 1 may have a thickness reduction rate of be 0% or more and 25% or less when a pressure of 30 kPa is applied. Specifically, the thickness of the fire-resistant pad 1 may be 0.2 mm or more and 5 mm or less, and when a pressure of 30 kPa is applied to the fire-resistant pad 1, the thickness may be 0.15 mm or more and 3.75 mm or less.

Meanwhile, referring to FIGS. 1 and 2 together, in one embodiment, the thermal insulation layer LL1 may be arranged to have one surface form extended on a plane. This is because, in the manufacturing process of the fire-resistant pad 1, the silicone-aerogel composite is arranged in a single layer form and then cured. However, the shape of the thermal insulation layer LL1 is not limited thereto.

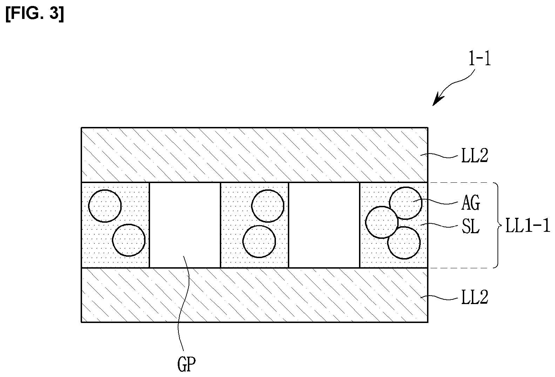

FIG. 3 is a cross-sectional view of a fire-resistant pad according to one embodiment.

Referring to FIG. 3, the thermal insulation layer LL1-1 in the fire-resistant pad 1-1 of one embodiment may be arranged in a stripe shape with a predetermined gap GP. This is because, in the manufacturing process of the fire-resistant pad 1-1, the silicone-aerogel composite is arranged in a stripe shape and then cured. Since the silicone-aerogel composite has a powder form, it can be arranged in a stripe shape. The fire-resistant pad 1-1 of one embodiment includes a gap GP in which air exists between the thermal insulation layers LL1-1, and thus can further improve the thermal insulation performance.

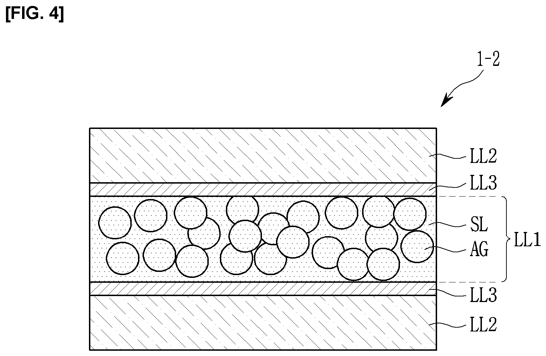

FIG. 4 is a cross-sectional view of a fire-resistant pad according to one embodiment.

Referring to FIG. 4, the fire-resistant pad 1-2 of one embodiment may further include a thermal insulation layer LL1, a fire-resistant layer LL2 arranged on at least one surface of the thermal insulation layer LL1, and an adhesive layer LL3 arranged between the thermal insulation layer LL1 and the fire-resistant layer LL2. The adhesive layer LL3 is a layer formed by curing an adhesive material, and the specific composition of the adhesive material will be described later.

For example, the fire-resistant pad 1-2 of one embodiment may include a thermal insulation layer LL1, a fire-resistant layer LL2 arranged on both surfaces of the thermal insulation layer LL1, and an adhesive layer LL3 arranged between the thermal insulation layer LL1 and the fire-resistant layer LL2.

The adhesive layer LL3 is provided for the purpose of increasing the adhesive strength between the thermal insulation layer LL1 and the fire-resistant layer LL2. In particular, when the content of aerogel AG is 30 wt.% or more, an adhesive layer LL3 may be provided to supplement the adhesive strength, but the content of aerogel AG is not limited and an adhesive layer LL3 may be further provided as necessary.

The adhesive material included in the adhesive layer LL3 may be a known adhesive material such as a silicone-based adhesive material, an acrylic-based adhesive material, or an epoxy-based adhesive material. For example, the adhesive layer LL3 may include a silicone-based adhesive material, and the silicone-based adhesive material may include a polydimethylsiloxane resin, a crosslinking agent, and a catalyst, and optionally further include a coupling agent. The polydimethylsiloxane resin may have a siloxane skeleton and may include one or more vinyl groups. In addition, the viscosity of the polydimethylsiloxane resin used in the silicone-based adhesive material of the present disclosure may be 5 cP or more and 5,000 cP or less. A silicon-based crosslinking agent containing at least one Si-H structure may be used as the crosslinking agent, and for example, polymethylhydrogen siloxane may be used. A platinum catalyst may be used as the catalyst. The coupling agent used herein may be a silane-based coupling agent represented by X-Si-OR₃ (where X=vinyl group, epoxy group, amino group, methacryloxy group, or mercapto group, and R=methoxy group, ethoxy group, dialkoxy group, or trialkoxy group). Since the silicon-based adhesive material basically has PSA (Pressure Sensitive Adhesive) properties, it is possible to have sufficient adhesive strength even without a coupling agent. However, depending on the type of the fire-resistant material included in the fire-resistant layer LL2, the silicon-based adhesive material may be mixed so as to include a coupling agent, thereby further improving the adhesive strength.

For example, the adhesive material of one embodiment may include a polydimethylsiloxane resin, a crosslinking agent, a catalyst, and a coupling agent. For example, based on the total weight of the adhesive material, the content of the polydimethylsiloxane resin may be greater than 77 wt.% and less than 100 wt.%, the content of the crosslinking agent may be greater than 0 wt.% and less than 10 wt.%, the content of the catalyst may be greater than 0 wt.% and less than 3 wt.%, and the content of the coupling agent may be greater than 0 wt.% and less than 10 wt.%. For example, based on the total weight of the adhesive material, the content of the polydimethylsiloxane resin may be 95 wt.%, the content of the crosslinking agent may be 1 wt.%, the content of the catalyst may be 0.5 wt.%, and the content of the coupling agent may be 3.5 wt.%, but the embodiments are not limited thereto.

The fire-resistant pad 1-2 of one embodiment includes an adhesive layer LL3 arranged between the thermal insulation layer LL1 and the fire-resistant layer LL2, and thus can strongly bond the thermal insulation layer LL1 and the fire-resistant layer LL2 regardless of the content of aerogel AG.

Meanwhile, the fire-resistant pad of the present disclosure comprises:
a first layer;
a second layer that includes a silicone-aerogel composite and is arranged on the first layer;
a third layer that is arranged on the second layer;
a fourth layer that includes the silicone-aerogel composite and is arranged on the third layer; and
a fifth layer that is arranged on the fourth layer;
wherein each of the first layer, the third layer, and the fifth layer includes a fire-resistant material.

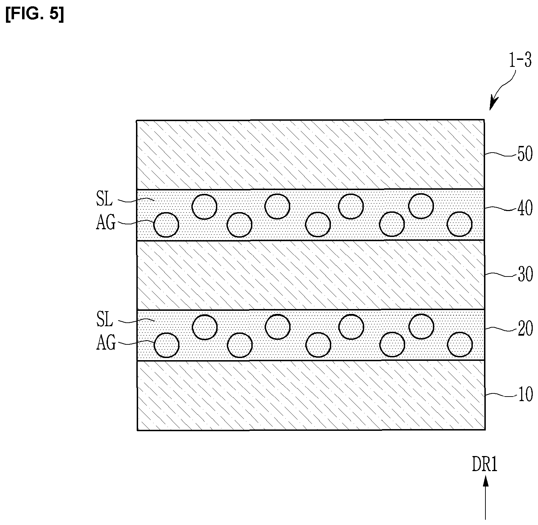

FIG. 5 is a cross-sectional view of a fire-resistant pad according to one embodiment.

Referring to FIG. 5, a fire-resistant pad 1-3 according to one embodiment comprises,
a first layer 10, a second layer 20, a third layer 30, a fourth layer 40, and a fifth layer 50 that are laminated in sequence along a first direction DR1,
wherein the second layer 20 and the fourth layer 40 may be the above-mentioned thermal insulation layer LL1, and
the first layer 10, the third layer 30 and the fifth layer 50 may be the above-mentioned fire-resistant layer LL2.

Each of the first layer 10, the third layer 30, and the fifth layer 50 includes a fire-resistant material. As previously described , the fire-resistant material may include at least one of a mica fiber, a glass fiber, a basalt fiber, a ceramic paper, and a vermiculite-coated glass fiber cloth.

The first layer 10, the third layer 30, and the fifth layer 50 may comprise the same fire-resistant material with each other, or at least one thereof may comprise a different fire-resistant material from each other. In one embodiment, the first layer 10 and the fifth layer 50 may comprise the same fire-resistant material with each other, while the third layer 30 may comprise a different fire-resistant material from that of the first layer 10 and the fifth layer 50. Alternatively, in one embodiment, the first layer 10, the third layer 30, and the fifth layer 50 may comprise the same fire resistant material with each other .

In one embodiment, the first layer 10 and the fifth layer 50 may be ceramic paper. Ceramic paper is made into a paper shape by providing a ceramic fiber with an inorganic and/or organic binder and then pressing them together. For example, each of the first layer 10 and the fifth layer 50 may use ceramic paper, and specifically, AES (alkaline earth silicate) such as Morgan's Super wool product may be used.

In one embodiment, the third layer 30 may be a vermiculite-coated glass fiber cloth (hereinafter, vermiculite cloth). Vermiculite cloth is made by weaving a material in which glass fiber is coated with vermiculite. For example, the vermiculite cloth may contain 46 to 50 wt.% of silicon, 15 to 18 wt.% of aluminum, 14 to 18 wt.% of magnesium, 14 to 17 wt.% of iron, and 1 to 5 wt.% of titanium as its composition.

Alternatively, the third layer 30 may be ceramic paper. That is, in one embodiment, the first layer 10, the third layer 30, and the fifth layer 50 may be ceramic paper.

Alternatively, in one embodiment, the first layer 10, the third layer 30, and the fifth layer 50 may be a vermiculite cloth.

As described above, the first layer 10, the third layer 30, and the fifth layer 50 are fire-resistant layers LL2 including fire-resistant materials, and the fire-resistant pad 1-3 including the same may exhibit excellent fire-resistant properties.

The second layer 20 and the fourth layer 40 are the above-mentioned thermal insulation layers LL1. That is, the second layer 20 and the fourth layer 40 include the above-mentioned silicone-aerogel composite. Specifically, the second layer 20 and the fourth layer 40 are layers obtained by mixing silicone SL and aerogel AG to form a silicone-aerogel composite, and then curing the silicone-aerogel composite. The details of silicone SL and aerogel AG can be applied similarly as described above.

The second layer 20 and the fourth layer 40 include such a silicone-aerogel composite and thus can exhibit excellent thermal insulation properties and sufficient adhesive properties. The second layer 20 can bond the first layer 10 and the third layer 30, and the fourth layer 40 can bond the third layer 30 and the fifth layer 50. Further, since the second layer 20 and the fourth layer 40 are adhesive layers, their thicknesses may be smaller than those of the first layer 10, the third layer 30, and the fifth layer 50. For example, the thickness of each of the first layer 10, the third layer 30, and the fifth layer 50 may be 0.5 mm or more and 3 mm or less, and the thickness of each of the second layer 20 and the fourth layer 40 may be 0.1 mm or more and 2 mm or less. However, the thickness of each layer is not limited thereto. Meanwhile, in this specification, the thickness is defined as the length measured in the first direction DR1.

As described above, each of the second layer 20 and the fourth layer 40 may be a thermal insulation adhesive layer that performs an adhesive layer function while having thermal insulation properties.

The fire-resistant pad 1-3 of the present disclosure includes the first to fifth layers 10, 20, 30, 40 and 50 described above, and thus can exhibit excellent fire resistance and thermal insulation properties.

In this way, the fire-resistant pads 1, 1-1, 1-2, 1-3 of the present disclosure can exhibit excellent fire resistance and thermal insulation properties. In addition, when the fire-resistant pads 1, 1-1, 1-2, 1-3 are applied to a battery pack, the fire-resistant pads 1, 1-1, 1-2, 1-3 can play a role in blocking the propagation of flame and heat. Specifically, the fire-resistant pads 1, 1-1, 1-2, 1-3 of the present disclosure can be arranged between battery cells included in the battery pack in the first direction DR1 (see FIG. 5), and exhibits excellent thermal insulation properties, thereby effectively preventing heat from spreading to adjacent battery cells. Therefore, the fire-resistant pads 1, 1-1, 1-2, 1-3 of the present disclosure can minimize heat transfer between battery cells, prevent heat from being concentrated on a specific cell, and prevent occurrence of thermal runaway propagation in advance.

Hereinafter, Examples of the present disclosure will be described in detail so that those skilled in the art can easily carry out them. However, the present disclosure may be modified in various different ways, and is not limited to Examples set forth herein.

### 1. Production of the thermal insulation layers of Examples 1 to 3 and Comparative Examples 1 to 4

### Production of the thermal insulation layer of Example 1

Solvent-free silicone and aerogel were mixed in a weight ratio of 87.18:12.82 to form a solid silicone-aerogel composite. For the silicone, Dowsil^{™} 7626 from Dow was used as the PDMS resin, Syl-off^{™} 7028 from Dow was used as the crosslinking agent, and Syl-offTM 4000 from Dow was used as the Pt catalyst. EV5200 from Cabot was used as the aerogel.

The produced silicone-aerogel composite was hot-pressed at 150°C and 1.5 kgf/cm² for 30 seconds to form a pad, which was further thermally cured in an oven at 150°C for 10 minutes to produce the thermal insulation layer of Example 1 having a thickness of 2 mm.

### Production of the thermal insulation layer of Example 2

A thermal insulation layer of Example 2 was produced in the same manner as in the thermal insulation layer of Example 1, except that silicone and aerogel were mixed in a weight ratio of 83.61:16.39.

### Production of then thermal insulation layer of Example 3

A thermal insulation layer of Example 3 was produced in the same manner as in the thermal insulation layer of Example 1, except that silicone and aerogel were mixed in a weight ratio of 80.31:19.69.

### Production of the thermal insulation layer of Comparative Example 1

Only silicone was used without aerogel. That is, a thermal insulation layer of Comparative Example 1 was produced in the same manner as in the thermal insulation layer of Example 1, except that silicone was used instead of the silicone-aerogel composite in Example 1.

### Production of the thermal insulation layer of Comparative Example 2

A thermal insulation layer of Comparative Example 2 was produced in the same manner as in the thermal insulation layer of Example 1, except that silicone and aerogel were mixed in a weight ratio of 50:50. However, the silicone-aerogel composite was not made into a pad.

### Production of thermal insulation layer of Comparative Example 3

A thermal insulation layer of Comparative Example 3 was produced in the same manner as in the thermal insulation layer of Example 1, except that silicone and aerogel were mixed in a weight ratio of 30:70. However, the silicone-aerogel composite was not made into a pad.

### Production of the thermal insulation layer of Comparative Example 4

Pure aerogel containing 100% of aerogel without silicone was prepared. It was provided in powder form and was not made into a pad.

### 2. Evaluation of thermal conductivity of the thermal insulation layers of Examples 1 to 3 and Comparative Examples 1 to 4

The thermal conductivity of the thermal insulation layers of Examples 1 to 3 and Comparative Examples 1 to 4 produced above was evaluated using the TPS method (ISO 2207-2). In the case of Comparative Examples 2 to 4 which was not made into a pad, the thermal conductivity was measured in powder form.

**[Table 1]**

| Category | Thermal conductivity (mW/m·K) | Pad formation |
|---|---|---|
| Example 1 | 131.9 | O |
| Example 2 | 107.2 | O |
| Example 3 | 81.9 | O |
| Comparative Example 1 | 231 | O |
| Comparative Example 2 | 45 | X |
| Comparative Example 3 | 40.3 | X |
| Comparative Example 4 | 29.3 | X |

Referring to Table 1, it can be confirmed that the thermal insulation layers of Examples 1 to 3 exhibit sufficiently low thermal conductivity of about 150 mW/m·K or less, specifically, 131.9 mW/m·K or less, and thus have excellent thermal insulation properties. In particular, it was confirmed that the thermal insulation layers of Examples 2 and 3 have lower thermal conductivity of about 110 mW/m·K or less, specifically 107.2 mW/m·K or less and optimized thermal insulation property, as the aerogel content is 15 wt.% or more.

In addition, it can be confirmed that the thermal insulation layers of Examples 1 to 3 contain 0.5 wt.% or more and 40 wt.% or less, or 10 wt.% or more and 30 wt.% or less of aerogel, and 60 wt.% or more and 99.5 wt.% or less, or 70 wt.% or more and 90 wt.% or less of silicone, so that they can be easily made into a pad while having sufficient thermal insulation performance. In particular, it can be confirmed that the thermal insulation layers of Examples 2 and 3 contain 15 wt.% or more and 30 wt.% or less of aerogel and 70 wt.% or more and 85 wt.% or less of silicone, so they can be made into a pad without any deterioration in mechanical properties while having excellent thermal insulation performance.

The thermal insulation layer of Comparative Example 1 did not contain aerogel and thus exhibited very high thermal conductivity, and it is anticipated that it will be difficult to expect thermal insulation performance.

The thermal insulation layers of Comparative Examples 2 and 3 had low thermal conductivity while exceeding the aerogel content of 40 wt.%, but could not be made into a pad.

The thermal insulation layer of Comparative Example 4 is in a state of being 100% aerogel, and has very low thermal conductivity, but it exists in powder form and is not made into a pad, so it cannot be applied as a fire-resistant pad.

### 3. Evaluation of Compressive Force Deflection (CFD)

The compressive force deflection was evaluated on the fire-resistant pads of Examples 4 and 5 below.

The fire-resistant pad of Example 4 includes the following thermal insulation layer and a fire-resistant layer arranged on both surfaces of the thermal insulation layer. The thermal insulation layer was produced in the same manner as in the thermal insulation layer of Example 1, except that silicone and aerogel were mixed in a weight ratio of 75:25. Ceramic paper was used as the fire-resistant layer.

To evaluate the compressive force deflection, 10 sheets of the 2 mm thick fire-resistant pads of Example 4 were laminated together, and the experiment was conducted on a sample with a total thickness of 20 mm.

Compressive Force Deflection (CFD) of the fire-resistant pad of Example 4 was evaluated using an Instron UTM tensile tester under the following conditions.
- PRELOAD: 140 Pa
- PREFLEX: 40kPa, 1 time, 1mm/min
- SPECIMEN SIZE: 50.0mm x 50.0mm
- SPECIMEN THICK: 24.25mm
- pressurizing force: 1kPa
- COMPRESSION Speed: 1mm/min
- holding time: 0 min

The fire-resistant pad of Example 5 was manufactured by laminating 10 sheets of fire-resistant pads of Example 4 and then wrapping them with a 50 µm thick PET film as a wrapping material.

Compressive Force Deflection (CFD) of the fire-resistant pad of Example 5 was evaluated using an Instron UTM as a tensile tester under the following conditions.
- PRELOAD: 300 Pa
- PREFLEX: -
- SPECIMEN SIZE: 50.0mm x 50.0mm
- SPECIMEN THICK: 25.60mm
- pressurizing force: 1kPa
- COMPRESSION Speed: 1mm/min
- holding time: 0 min

The CFD evaluation results for the fire-resistant pads of Examples 4 and 5 are shown in Table 2 below.

**[Table 2]**

| Category | Example 4 | Example 5 |
|---|---|---|
| Strain(%) | Stress(kPa) | |
| 5 | 1.7 | 1.8 |
| 10 | 3.4 | 2.9 |
| 15 | 6.5 | 5.6 |
| 20 | 13.7 | 10.5 |
| 25 | 31.8 | 20.4 |
| 30 | 69 | 40.9 |
| 35 | 129.6 | 79.9 |
| 40 | 220.0 | 146.6 |
| 45 | 345.2 | 249.7 |
| 50 | 520.8 | 411.7 |
| 55 | 774.5 | 701.2 |
| 60 | 1179.4 | 1334.7 |
| 65 | 1940.2 | 2747.9 |
| 70 | 3586.9 | 5427.4 |
| 75 | 7213.8 | 9061.6 |
| 80 | 12158.9 | 12151.9 |

Referring to Table 2, it can be confirmed that the fire-resistant pads of Examples 4 and 5 have significantly low stress in the range of strain 0% to 40%, which is the initial compression ratio, and in particular, they have a stress of 220 kPa at a strain of 40%, which receive a stress of 250 kPa or less.

This confirms that the fire-resistant pad of the present disclosure has good compressibility and excellent flexibility in the range of strain 0% to 40%, which is the initial compression ratio.

### 4. Thermogravimetric analysis (TGA) evaluation

The thermogravimetric analysis (TGA) evaluation was performed on the fire-resistant pad of Example 2 and the non-combustible material of one embodiment under the following conditions. The non-combustible material of one embodiment used was Morgan's super wool.

### [Experimental conditions]

Ramping rate: 10°C/min,
Temperature range: 50°C- 1000°C,
Atmosphere: air

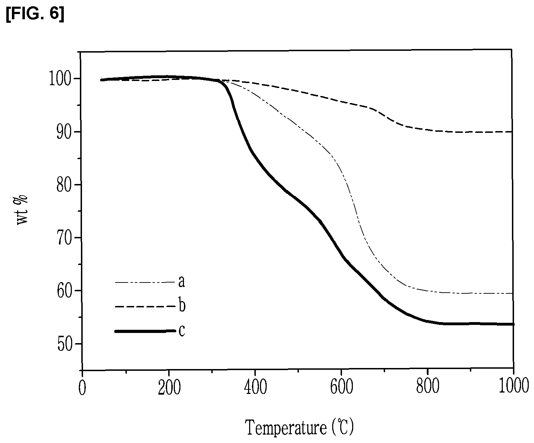

FIG. 6 is a graph showing the results of a TGA analysis of a fire-resistant pad according to Example 2.

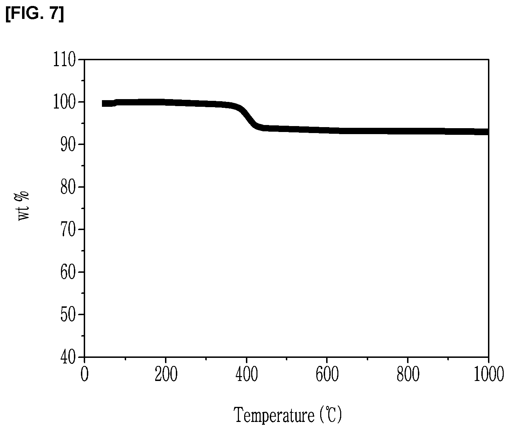

FIG. 7 is a graph showing the results of a TGA analysis of a non-combustible material according to one embodiment.

Specifically, graph a in FIG. 6 shows the residual rate (wt.%) of the fire-resistant pad of Example 2. Graph b in FIG. 6 shows the residual rate (wt.%) of the aerogel in the fire-resistant pad of Example 2. Graph c in FIG. 6 shows the residual rate (wt.%) of the silicon in the fire-resistant pad of Example 2. FIG. 7 shows the residual rate (wt.%) of the non-combustible material.

Referring to FIGS. 6 and 7, the residual rate of each composition at 1000°C is shown in Table 3 below.

**[Table 3]**

| Category | Residual rate (wt.%) |
|---|---|
| Fire-resistant pad of Example 2 | 59 |
| Aerogel in the fire-resistant pad of Example 2 | 89.4 |
| Silicone in the fire-resistant pad of Example 2 | 52.9 |
| Non-combustible material | 93.1 |

Referring to Table 3, it can be confirmed that the fire-resistant pad of Example 2 has a residual rate of 50 wt.% or more at 1000°C, and the aerogel in the fire-resistant pad of Example 2 has a residual rate of 85% or more.

In the case of the non-combustible material, the residual rate is lower than 100 wt.%, but this indicates that the non-combustible material is not burned, but rather the organic binder that has formed the non-combustible material into a sheet is burned and the mass is reduced. In other words, the non-combustible material contained in the non-combustible material is maintained as it is at 1000°C. Therefore, if the non-combustible material is applied to the fire-resistant pad of Example 2, the fire resistance can be expected to be further improved.

In addition, the thermal decomposition starting temperature of each component is shown in Table 4 below.

**[Table 4]**

| Category | Thermal decomposition starting temperature (°C) |
|---|---|
| Fire-resistant pad of Example 2 | 350 |
| Silicone | 330 |
| Non-combustible material | 363 |

Referring to Table 4, it can be confirmed that the thermal decomposition starting temperature of the fire-resistant pad of Example 2 is 300°C or more.

In conclusion, referring to Tables 3 and 4, it can be confirmed that the fire-resistant pad according to one embodiment of the present disclosure has a residual rate of 50 wt.% or more at 1000°C and has excellent fire resistance even in a high-temperature environment with a thermal decomposition starting temperature of 300°C or more.

As described above, the fire-resistant pad of the present disclosure includes a fire-resistant layer containing a fire-resistant material and a thermal insulation layer containing a silicone-aerogel composite, and the content of aerogel of the silicone-aerogel composite satisfies 0.5 wt.% or more and 40 wt.% or less, thereby having low thermal conductivity, exhibiting excellent thermal insulation properties, facilitating pad formation, and having excellent processability.

Although preferred embodiments of the present disclosure have been described in detail above, the scope of the present disclosure is not limited thereto, and various modifications and improvements made by those skilled in the art using the basic concepts of the present disclosure, which are defined in the appended claims, also belong to the scope of the present disclosure.

### [Description of Reference Numerals]

1, 1-1, 1-2, 1-3: fire-resistant pad
LL1: thermal insulation layer
LL2: fire-resistant layer
LL3: adhesive layer
10: first layer
20: second layer
30: third layer
40: fourth layer
50: fifth layer
AG: aerogel
SL: silicone

## Claims

1. A fire-resistant pad comprising:
a thermal insulation layer containing a silicone-aerogel composite including silicone and aerogel,
wherein the silicone-aerogel composite contains 0.5 wt.% or more and 40 wt.% or less of aerogel, based on the total weight of the thermal insulation layer.

2. The fire-resistant pad according to claim 1,
wherein the silicone-aerogel composite contains 60 wt.% or more and 99.5 wt.% or less of silicone, based on the total weight of the thermal insulation layer.

3. The fire-resistant pad according to claim 1,
wherein the content of the aerogel is 15 wt.% or more and 30 wt.% or less.

4. The fire-resistant pad according to claim 1,
wherein the thickness of the thermal insulation layer is 0.1 mm or more and 5 mm or less.

5. The fire-resistant pad according to claim 1,
further comprising a fire-resistant layer that is arranged on at least one surface of the thermal insulation layer, and includes a fire-resistant material containing at least one of a non-combustible material and a flame-retardant material.

6. The fire-resistant pad according to claim 5,
wherein the thickness of the fire-resistant layer is 0.1 mm or more and 5 mm or less.

7. The fire-resistant pad according to claim 5,
wherein the fire-resistant layer is arranged on both surfaces of the thermal insulation layer.

8. The fire-resistant pad according to claim 5,
further comprising an adhesive layer that is arranged between the fire-resistant layer and the thermal insulation layer.

9. The fire-resistant pad according to claim 5,
wherein the fire-resistant material comprises at least one of a mica fiber, a glass fiber, a basalt fiber, a ceramic paper, and a vermiculite-coated glass fiber cloth.

10. The fire-resistant pad according to claim 5,
further comprising a first layer, a second layer, a third layer, a fourth layer and a fifth layer that are laminated in sequence,
wherein the second layer and the fourth layer are the thermal insulation layer, and
the first layer, the third layer and the fifth layer are the fire-resistant layer.

11. The fire-resistant pad according to claim 10,
wherein the first layer and the fifth layer comprise the same fire-resistant material with each other, and the third layer comprises a different fire-resistant material from that of the first layer and the fifth layer.

12. The fire-resistant pad according to claim 10,
wherein the first layer, the third layer and the fifth layer comprise the same fire-resistant material with each other.

13. The fire-resistant pad according to claim 10,
wherein the first layer and the fifth layer are ceramic paper, and the third layer is a vermiculite-coated glass fiber cloth.

14. The fire-resistant pad according to claim 10,
wherein the first layer, the third layer, and the fifth layer are ceramic paper.

15. The fire-resistant pad according to claim 10,
wherein the thickness of the second layer and the fourth layer is smaller than the thickness of the first layer, the third layer, and the fifth layer.

16. The fire-resistant pad according to claim 10,
wherein the thickness of each of the first layer, the third layer, and the fifth layer is 0.5 mm or more and 3 mm or less.

17. The fire-resistant pad according to claim 10,
wherein the thickness of each of the second layer and the fourth layer is 0.1 mm or more and 2 mm or less.

18. The fire-resistant pad according to claim 1,
wherein the aerogel comprises a silica gel.

19. The fire-resistant pad according to claim 1,
wherein the silicone comprises a polydimethylsiloxane (PDMS) resin, and optionally further comprises at least one of a crosslinking agent and a catalyst.

20. The fire-resistant pad according to claim 19,
wherein based on the total mixing amount of the silicone-aerogel composite, the content of the polydimethylsiloxane resin is 47 wt.% or more and 99.5 wt.% or less, the content of the crosslinking agent is 0 wt.% or more and 10 wt.% or less, and the content of the catalyst is 0 wt.% or more and 3 wt.% or less.

21. The fire-resistant pad according to claim 1,
wherein the thermal conductivity of the fire-resistant pad is 10 mW/m·K or more and 200 mW/m·K or less.

22. The fire-resistant pad according to claim 1,
wherein the fire-resistant pad has a stress of 250 kPa or less at a strain of 40%.

23. The fire-resistant pad according to claim 1,
wherein the fire-resistant pad has a residual rate of 50 wt.% or more at 1000°C.

24. The fire-resistant pad according to claim 1,
wherein the fire-resistant pad has a thermal decomposition starting temperature of 300°C or more.

25. The fire-resistant pad according to claim 1,
wherein the fire-resistant pad has a heat of combustion of 5000 cal/g or more.

26. The fire-resistant pad according to claim 1,
wherein the fire-resistant pad has a thickness of 0.2 mm or more and 5 mm or less.

27. The fire-resistant pad according to claim 1,
wherein the fire-resistant pad has a thickness reduction rate of 40% or less when a pressure of 220 kPa is applied.

28. The fire-resistant pad according to claim 1,
wherein the fire-resistant pad has a thickness of 0.12 mm or more and 3 mm or less when a pressure of 220 kPa is applied.
